# EUROPÄISCHE PATENTSCHRIFT

(11) **EP 2 579 398 B1**
(45) Veröffentlichungstag und Bekanntmachung des Hinweises auf die Patenterteilung: **17.01.2018**
(21) Anmeldenummer: 12172347.2
(22) Anmeldetag: 18.06.2012
(51) Int. Cl.: H01R 13/717, H01R 24/78, H02G 3/14, H02G 3/12

(54) **Elektrische Schutzkontaktsteckdose**
Electric safety plug
Prise électrique à contact protégé

(30) Priorität: 07.10.2011 DE 102011054266
(43) Veröffentlichungstag der Anmeldung: 10.04.2013
(73) Patentinhaber: Berker GmbH & Co. KG, 58579 Schalksmühle (DE)
(72) Erfinder: Ludwig, Ralf, 58509 Lüdenscheid (DE); Kutzehr, Tobias, 58285 Gevelsberg (DE)
(74) Vertreter: Nuss, Laurent

(56) Entgegenhaltungen:
- DE-A1-102007 046 818
- DE-B3-102007 018 177
- DE-U1-202006 006 105
- US-A1- 2004 219 823

## Beschreibung

Die vorliegende Erfindung geht von einer gemäß Oberbegriff des Hauptanspruches konzipierten elektrischen Schutzkontaktsteckdose aus.

Derartige elektrische Schutzkontaktsteckdosen sind insbesondere dafür vorgesehen, je nach Bedarf über einen entsprechend ausgebildeten einsteckbaren Schutzkontaktstecker und gegebenenfalls eine daran angeschlossene elektrische Leitung eine leicht wieder trennbar elektrisch leitende Verbindung zu einem elektrischen Verbraucher herzustellen.

Eine dem Oberbegriff des Hauptanspruches entsprechende elektrische Schutzkontaktsteckdose ist durch die DE 10 2009 031 586 B3 bekannt geworden. Diese elektrische Schutzkontaktsteckdose ist mit einer Designabdeckung versehen. Außerdem ist ein mit einem Tragring versehenes, die elektrische Verbindung zum Installationssystem des Gebäudes ermöglichendes Sockelteil vorgesehen, an welches zudem eine zumindest ein Leuchtmittel aufweisende Beleuchtungseinrichtung angeschlossen ist. Die Beleuchtungseinrichtung weist eine mit zumindest einem Leuchtmittel versehene Leiterplatte auf, welche über zwei Kontaktfedern elektrisch leitend mit im Sockelteil angeordneten Kontaktteilen in Verbindung steht. Diese Beleuchtungseinrichtung ist jedoch unter Einbeziehung eines speziell dafür ausgebildeten Designrahmens realisiert und erfordert zur Unterbringung einen nicht unerheblichen Raum, der dort nicht immer zur Verfügung steht.

Außerdem ist eine weitere, dem Oberbegriff des Hauptanspruches entsprechende Schutzkontaktsteckdose durch die DE 10 2007 046 818 A1 bekannt geworden. Diese elektrische Schutzkontaktsteckdose ist mit einer Designabdeckung versehen. Außerdem ist ein mit einem Tragring versehenes, die elektrische Verbindung zum Installationssystem des Gebäudes ermöglichendes Sockelteil vorgesehen, an welches zudem eine zumindest ein Leuchtmittel aufweisende Beleuchtungseinrichtung angeschlossen ist. Die Beleuchtungseinrichtung weist eine mit zumindest einem Leuchtmittel versehene Leiterplatte auf, welche über zwei Kontaktfedern elektrisch leitend mit im Sockelteil angeordneten Kontaktteilen in Verbindung steht. Die Beleuchtungseinrichtung weist ein separates, aus einem Oberteil und einem Unterteil bestehendes Elektronikgehäuse auf, in welchem die mit den Leuchtmitteln bestückte Leiterplatte aufgenommen wird. Dieses separate Gehäuse wird an dem, die Steckkontaktteile aufnehmenden Steckdosensockelteil festgelegt, und benötigt einen nicht unerheblichen Raum, der dort nicht immer zur Verfügung steht.

Des Weiteren ist durch die DE 20 2006 006 105 U1 eine elektrische Schutzkontaktsteckdose mit einer Beleuchtungseinrichtung bekannt geworden. Diese elektrische Schutzkontaktsteckdose besteht aus einem Geräteeinsatz, einer mit dem Geräteinsatz mechanisch zu verbindenden Zentralabdeckung sowie insbesondere einem, die Zentralabdeckung umgebenden Abdeckrahmen, wobei der Geräteeinsatz elektrische Kontaktelemente zum Anschluss einer Netzspannung aufweist. Die Zentralabdeckung weist eine integrierte Beleuchtungseinrichtung mit Leuchtmitteln und derart ausgebildeten Verbindungskontakten auf, dass bei mechanischem Verbinden der Zentralabdeckung mit dem Geräteeinsatz, die Verbindungskontakte der Beleuchtungseinrichtung selbsttätig die Kontaktelemente des Geräteeinsatzes elektrisch kontaktieren.

Zwar lassen sich solche Beleuchtungseinrichtungen für verschiedene Gerätetypen von Installationsgeräten, wie Schutzkontaktsteckdosen, Orientierungsleuchten und Schaltgeräten verwenden, jedoch ist diese Verwendung immer nur einem einzigen Funktionszweck bzw. Beleuchtungszweck zugeordnet.

Der vorliegenden Erfindung liegt deshalb die Aufgabe zugrunde, Beleuchtungseinrichtungen für elektrische Schutzkontaktsteckdosen derart auszugestalten, so dass eine modulartige Verwendung für verschiedene Funktionsbereiche bzw. Beleuchtungszwecke auf einfache Art und Weise realisierbar ist.

Diese Aufgabe wird durch die im Hauptanspruch angegebenen Merkmale gelöst.

Bei einer solchermaßen ausgebildeten elektrischen Schutzkontaktsteckdose ist besonders vorteilhaft, dass die Beleuchtungseinrichtungen modulartig aufgebaut sind, wodurch die Realisierung verschiedener Funktionsbereiche bzw. die Zuordnung zu verschiedenen Beleuchtungszwecken sowie Herstellung und Montage erheblich vereinfacht sind.

Weil solchermaßen ausgebildete elektrische Schutzkontaktsteckdosen generell die Möglichkeit bieten, Beleuchtungseinrichtungen modulartig aufzunehmen, ist besonders vorteilhaft, dass solche elektrische Schutzkontaktsteckdosen bedarfsweise mit zumindest einer Beleuchtungseinrichtung bzw. einer weiteren Beleuchtungseinrichtung ausgerüstet werden können, so dass auch eine nachträgliche Ausrüstung bereits installierter Schutzkontaktsteckdosen vor Ort auf einfache Art und Weise möglich ist.

Weitere vorteilhafte Ausgestaltungen des erfindungsgemäßen Gegenstandes sind in den Unteransprüchen angegeben. Anhand dreier in den Zeichnungen näher dargestellten Ausführungsbeispiele sei der erfindungsgemäße Gegenstand näher erläutert. Dabei zeigen:
- Fig. 1:: prinziphaft eine elektrische Schutzkontaktsteckdose mit Kontrollbeleuchtung gemäß zweitem Ausführungsbeispiel räumlich in Explosionsdarstellung;
- Fig. 2:: prinziphaft eine elektrische Schutzkontaktsteckdose mit Ambientebeleuchtung gemäß erstem Ausführungsbeispiel räumlich in Explosionsdarstellung
- Fig. 3:: prinziphaft eine elektrische Schutzkontaktsteckdose mit Ambientebeleuchtung und Kontrollbeleuchtung gemäß drittem Ausführungsbeispiel räumlich in Explosionsdarstellung.

Wie aus den Zeichnungen hervorgeht, besteht eine solche elektrische Schutzkontaktsteckdose hauptsächlich aus einem Sockelteil 1, einem am Sockelteil 1 festlegbaren Tragring 2, einem Designrahmen 3 und einem Steckdosenzentralstück 4. Der Designrahmen 3 und das Steckdosenzentralstück 4 stellen insgesamt die Designabdeckung dar. Das mit dem Tragring 2 versehene Sockelteil 1 stellt die elektrische Verbindung zum Installationssystem des Gebäudes her, wobei zwei verschiedene Beleuchtungseinrichtungen elektrisch leitend an die im Sockelteil 1 befindlichen Anschlusskontaktteile 10 angeschlossen werden können. Wie des Weiteren aus den Figuren hervorgeht, besteht das aus Kunststoff hergestellte Sockelteil 1 aus einem Sockelunterteil 1A und einem Sockeloberteil 1B.

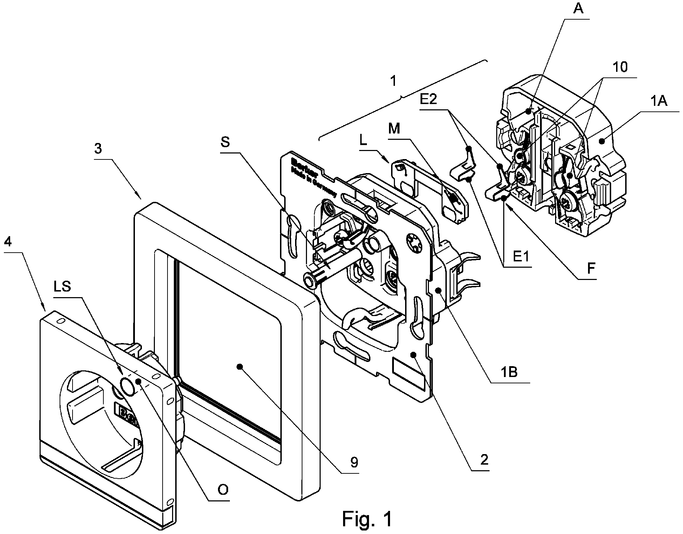

Wie insbesondere aus Figur 1 hervorgeht ist im Sockelunterteil 1A des Sockelteils 1 ein Aufnahmeraum A vorhanden, der zur Unterbringung der wesentlichen Bestandteile der ersten Beleuchtungseinrichtung vorgesehen ist. Eine mit einem ersten Leuchtmittel M bestückte erste elektrische Leiterplatte L wird im Aufnahmeraum A untergebracht. Das erste Leuchtmittel M ist als LED ausgeführt und speist sein Licht in ein erstes Lichtleitelement S ein, welches stabförmig ausgebildet und durch das Sockeloberteil 1B bis in eine erste Öffnung O des Steckdosenzentralstücks 4 hingeführt ist. Die Öffnung O ist außenseitig durch eine zur Lichtauskopplung vorgesehene, sogenannte optische Linse LS verschlossen. Das vom ersten Leuchtmittel M abgegebene Licht wird also einerseits in das erste Lichtleitelement S eingekoppelt, bis an dessen in die erste Öffnung O hineinragenden Endbereich geleitet und über die Linse LS nach außen abgegeben. Über zwei erste Kontaktfedern F ist die erste Leiterplatte L der ersten Beleuchtungseinrichtung an die beiden Anschlusskontaktteile 10 elektrisch leitend anschließbar. Die beiden ersten Kontaktfedern F stehen dabei mit ihrem ersten Endbereich E1 direkt mit dem zugehörigen Anschlusskontaktteil 10 in Verbindung und kommen jeweils mit ihrem zweiten Endbereich E2 an die zugehörige Kontaktfläche der ersten Leiterplatte L zur Anlage. Die beiden Anschlusskontaktteile 10 sind in entsprechenden ausgebildeten Aufnahmekammern des Sockelunterteils 1A angeordnet.

Die erste Beleuchtungseinrichtung erfüllt im vorliegenden Fall den Funktionsbereich bzw. den Beleuchtungszweck Kontrollbeleuchtung. Eine solche Kontrollbeleuchtung ist dafür vorgesehen, um den Benutzern deutlich anzuzeigen, ob die betreffende Schutzkontaktsteckdose Strom führt. D. h. führt die Schutzkontaktsteckdose Strom, ist die Funktionsbeleuchtung in Betrieb. Es kann somit schnell und deutlich erkannt werden, ob ein anzuschließender Verbraucher mit Sicherheit sofort betrieben werden kann. Oftmals ist eine solche Information in Krankenhäusern notwendig, um im Notfall schnell entscheiden zu können, an welche Schutzkontaktsteckdose ein Gerät bzw. Verbraucher anzuschließen ist.

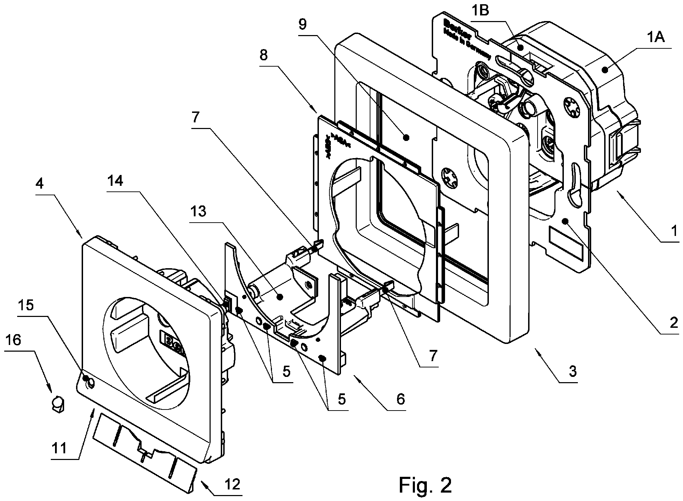

Wie insbesondere aus Figur 2 hervorgeht, ist die zweite elektrische Leiterplatte 6 der zweiten Beleuchtungseinrichtung von einer Tragplatte 8 aufgenommen. Die Tragplatte 8 und die zweite Leiterplatte 6 sind unterhalb des Steckdosenzentralstücks 4 innerhalb der Durchtrittsöffnung 9 des Designrahmens 3 angeordnet. Über zwei zweite Kontaktfederelemente 7 wird eine elektrisch leitende Verbindung der zweiten Leiterplatte 6 mit den im Sockelteil 1 angeordneten Anschlusskontaktteilen 10 - nicht dargestellt - hergestellt. Das Steckdosenzentralstück 4 ist mit einer, den Lichtaustritt der zweiten Leuchtmittel 5 ermöglichenden zweiten Öffnung 11 versehen. Im vorliegenden Fall sind vier, jeweils als LED ausgebildete, zweite Leuchtmittel 5 auf der zweiten Leiterplatte 6 vorhanden. Das Steckdosenzentralstück 4 weist eine zweite Öffnung 11 auf, die sich schlitzartig über einen Randbereich des Steckdosenzentralstücks 4 erstreckt. Ein entsprechend länglich ausgebildetes zweites Lichtleitelement 12 ist einerseits mit seinem Auskoppelbereich in der zweiten Öffnung 11 angeordnet und andererseits den vier zweiten Leuchtmitteln 5 zur Lichteinkopplung mit seinem Lichteinkoppelbereich zugeordnet. Die beiden zur Herstellung der elektrischen Verbindung - wie vorstehend bereits beschrieben - vorgesehenen Kontaktfederelemente 7 sind von einem Führungs- und Haltegehäuse 13 aufgenommen. Zudem ist die zweite Leiterplatte 6 mit einem Helligkeitssensor 14 bestückt, welcher einer weiteren Öffnung 15 des Steckdosenzentralstücks 4 zugeordnet ist, wobei die weitere Öffnung 15 von einer weiteren optischen Linse 16 verschlossen ist.

Die zweite Beleuchtungseinrichtung erfüllt im vorliegenden Fall den Funktionsbereich bzw. den Beleuchtungszweck Ambientebeleuchtung. Eine solche Ambientebeleuchtung ist dafür vorgesehen, mit Licht für Benutzer eine optisch ansprechende Erscheinung zu realisieren. Der auf der zweiten Leiterplatte 6 angeordnete Helligkeitssensor 14 sorgt dafür, dass bei einer entsprechend schwachen Umgebungshelligkeit die zweiten Leuchtmittel 5 in Betrieb genommen werden und ihr Licht über das zweite Lichtleitelement 12 als Ambientebeleuchtung an die Umgebung abgeben. Eine solche Ambientebeleuchtung kann z. B. im Kinderzimmer als Nachtlicht, in längeren Fluren als Grundbeleuchtung oder als Führungsbeleuchtung benutzt werden. Da die zweite Leiterplatte 6 mit mehreren zweiten Leuchtmitteln 5 bestückt ist, besteht die Möglichkeit, z. B. eines der zweiten Leuchtmittel 5 einem anderen Funktionsbereich bzw. Beleuchtungszweck zuzuordnen. Die Zuordnung kann dann z. B. zur Realisierung einer Funktionsbeleuchtung ausgenutzt werden.

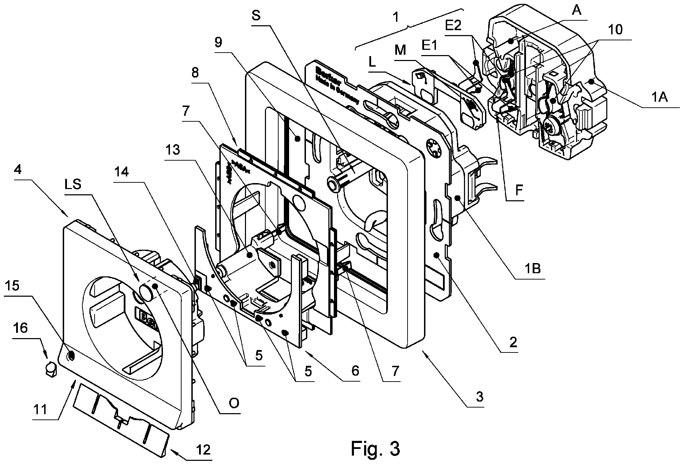

Wie insbesondere aus Figur 3 hervorgeht, ist im Sockelunterteil 1A des Sockelteils 1 ein Aufnahmeraum A vorhanden, der zur Unterbringung der wesentlichen Bestandteile der ersten Beleuchtungseinrichtung vorgesehen ist. Eine mit einem ersten Leuchtmittel M bestückte erste elektrische Leiterplatte L ist im Aufnahmeraum A untergebracht. Das erste Leuchtmittel M ist als LED ausgeführt und speist sein Licht in ein erstes Lichtleitelement S ein, welches stabförmig ausgebildet und durch das Sockeloberteil 1B bis in eine erste Öffnung O des Steckdosenzentralstücks 4 hingeführt ist. Die Öffnung O ist außenseitig durch eine zur Lichtauskopplung vorgesehene, sogenannte optische Linse LS verschlossen. Das vom ersten Leuchtmittel M abgegebene Licht wird also einerseits in das erste Lichtleitelement S eingekoppelt, bis an dessen in die erste Öffnung O hineinragenden Endbereich geleitet und über die Linse LS nach außen abgegeben. Über zwei erste Kontaktfedern F ist die erste Leiterplatte L der ersten Beleuchtungseinrichtung an die beiden Anschlusskontaktteile 10 elektrisch leitend anschließbar. Die beiden ersten Kontaktfedern F stehen dabei mit ihrem ersten Endbereich E1 direkt mit dem zugehörigen Anschlusskontaktteil 10 in Verbindung und kommen jeweils mit ihrem zweiten Endbereich E2 an die zugehörige Kontaktfläche der ersten Leiterplatte L zur Anlage. Die beiden Anschlusskontaktteile 10 sind in entsprechenden ausgebildeten Aufnahmekammern des Sockelunterteils 1A angeordnet.
Wie außerdem ist insbesondere der Figur 3 zu entnehmen ist, ist die zweite elektrische Leiterplatte 6 der zweiten Beleuchtungseinrichtung von einer Tragplatte 8 aufgenommen. Die Tragplatte 8 und die zweite Leiterplatte 6 sind unterhalb des Steckdosenzentralstücks 4 innerhalb der Durchtrittsöffnung 9 des Designrahmens 3 angeordnet. Über zwei zweite Kontaktfederelemente 7 wird eine elektrisch leitende Verbindung der zweiten Leiterplatte 6 mit den im Sockelteil 1 angeordneten Anschlusskontaktteilen 10 hergestellt. Das Steckdosenzentralstück 4 ist mit einer, den Lichtaustritt der zweiten Leuchtmittel 5 ermöglichenden zweiten Öffnung 11 versehen. Im vorliegenden Fall sind vier, jeweils als LED ausgebildete, zweite Leuchtmittel 5 auf der zweiten Leiterplatte 6 vorhanden. Das Steckdosenzentralstück 4 weist eine zweite Öffnung 11 auf, die sich schlitzartig über einen Randbereich des Steckdosenzentralstücks 4 erstreckt. Ein entsprechend länglich ausgebildetes zweites Lichtleitelement 12 ist einerseits mit seinem Auskoppelbereich in der zweiten Öffnung 11 angeordnet und andererseits den vier zweiten Leuchtmitteln 5 zur Lichteinkopplung mit seinem Lichteinkoppelbereich zugeordnet. Die beiden zur Herstellung der elektrischen Verbindung - wie vorstehend bereits beschrieben - vorgesehenen Kontaktfederelemente 7 sind von einem Führungs- und Haltegehäuse 13 aufgenommen. Zudem ist die zweite Leiterplatte 6 mit einem Helligkeitssensor 14 bestückt, welcher einer weiteren Öffnung 15 des Steckdosenzentralstücks 4 zugeordnet ist, wobei die weitere Öffnung 15 von einer weiteren optischen Linse 16 verschlossen ist.

Die erste Beleuchtungseinrichtung erfüllt im vorliegenden Fall den Funktionsbereich bzw. den Beleuchtungszweck Kontrollbeleuchtung. Eine solche Kontrollbeleuchtung ist dafür vorgesehen, um den Benutzern deutlich anzuzeigen, ob die betreffende Schutzkontaktsteckdose Strom führt. D. h. führt die Schutzkontaktsteckdose Strom, ist die Funktionsbeleuchtung in Betrieb. Es kann somit schnell und deutlich erkannt werden, ob ein anzuschließender Verbraucher mit Sicherheit sofort betrieben werden kann. Oftmals ist eine solche Information in Krankenhäusern notwendig, um im Notfall schnell entscheiden zu können, an welche Schutzkontaktsteckdose ein Gerät bzw. Verbraucher anzuschließen ist. Die zweite Beleuchtungseinrichtung erfüllt im vorliegenden Fall den Funktionsbereich bzw. den Beleuchtungszweck Ambientebeleuchtung. Eine solche Ambientebeleuchtung ist dafür vorgesehen, mit Licht für Benutzer eine optisch ansprechende Erscheinung zu realisieren. Der auf der zweiten Leiterplatte 6 angeordnete Helligkeitssensor 14 sorgt dafür, dass bei einer entsprechend schwachen Umgebungshelligkeit die zweiten Leuchtmittel 5 in Betrieb genommen werden und ihr Licht über das zweite Lichtleitelement 12 als Ambientebeleuchtung an die Umgebung abgeben. Eine solche Ambientebeleuchtung kann z. B. im Kinderzimmer als Nachtlicht, in längeren Fluren als Grundbeleuchtung oder als Führungsbeleuchtung benutzt werden.

### Bezugszeichenliste

- 1: Sockelteil
- 1A: Sockelunterteil
- 1B: Sockeloberteil
- 2: Tragring
- 3: Designrahmen
- 4: Steckdosenzentralstück
- 5: Zweite Leuchtmittel
- 6: Zweite Leiterplatte
- 7: Zweite Kontaktfederelemente
- 8: Tragplatte
- 9: Durchtrittsöffnung
- 10: Anschlusskontaktteile
- 11: Zweite Öffnung
- 12: Zweites Lichtleitelement
- 13: Führungs- und Haltegehäuse
- 14: Helligkeitssensor
- 15: Weitere Öffnung
- 16: Weitere optische Linse
- A: Aufnahmeraum
- M: Erstes Leuchtmittel
- L: Erste Leiterplatte
- S: Erstes Lichtleitelement
- O: Erste Öffnung
- LS: Optische Linse
- F: Erste Kontaktfedern
- E1: Erster Endbereich
- E2: Zweiter Endbereich

## Patentansprüche

1. Elektrische Schutzkontaktsteckdose mit einer aus Designrahmen und Steckdosenzentralstück bestehenden Designabdeckung und mit einem, mit einem Tragring versehenen, die elektrische Verbindung zum Installationssystem des Gebäudes ermöglichenden Sockelteil, an welches zudem eine zumindest ein Leuchtmittel aufweisende Beleuchtungseinrichtung angeschlossen ist, wobei die Beleuchtungseinrichtung eine mit zumindest einem Leuchtmittel bestückte Leiterplatte aufweist, welche über Kontaktfedern elektrisch leitend mit im Sockelteil angeordneten Anschlusskontaktteilen in Verbindung steht, wobei im Sockelteil (1) ein Aufnahmeraum (A) für eine mit zumindest einem ersten Leuchtmittel (M) bestückte erste Leiterplatte (L) einer ersten Beleuchtungseinrichtung vorhanden ist, welche elektrisch leitend mit den im Sockelteil (1) angeordneten Anschlusskontaktteilen (10) in Verbindung steht, und wobei das Steckdosenzentralstück (4) mit zumindest einer ersten Öffnung (O) versehen ist, um den Lichtaustritt des zumindest einen ersten Leuchtmittels (M) zu ermöglichen, **dadurch gekennzeichnet, dass** eine mit zumindest einem zweiten Leuchtmittel (5) bestückte zweite elektrische Leiterplatte (6) einer zweiten Beleuchtungseinrichtung von einer Tragplatte (8) aufgenommen ist, die unterhalb des Steckdosenzentralstücks (4) innerhalb der Durchtrittsöffnung (9) des Designrahmens (3) angeordnet ist, welche über zwei zweite Kontaktfederelemente (7) elektrisch leitend mit den im Sockelteil (1) angeordneten Anschlusskontaktteilen (10) in Verbindung steht, und dass das Steckdosenzentralstück (4) mit zumindest einer zweiten Öffnung (11) versehen ist, um den Lichtaustritt des zumindest einen zweiten Leuchtmittels (5) zu ermöglichen.

2. Elektrische Schutzkontaktsteckdose nach Anspruch 1, **dadurch gekennzeichnet, dass** die erste elektrische Leiterplatte (L) auf einer ihrer Hauptflächen mit zwei Kontaktflächen versehen ist, welche einerseits elektrisch leitend an ersten Kontaktfedern (F) zur Anlage kommen, welche andererseits elektrisch leitend mit den Anschlusskontaktteilen (10) des Sockelteils (1) in Verbindung stehen.

3. Elektrische Schutzkontaktsteckdose nach Anspruch 1 oder 2, **dadurch gekennzeichnet, dass** die zweite Leiterplatte (6) mit mehreren zweiten Leuchtmitteln (5) bestückt ist, welche zumindest zwei verschiedenen Funktionsbereichen zugeordnet sind.

4. Elektrische Schutzkontaktsteckdose nach Anspruch 1 bis 3, **dadurch gekennzeichnet, dass** in zumindest eine erste Öffnung (O) einerseits ein erster Lichtauskoppelbereich eines ersten Lichtleitelementes (S) hineinragt, welches andererseits zur Lichteinkopplung zumindest einem auf der ersten Leiterplatte (L) befindlichen ersten Leuchtmittel (M) zugeordnet ist.

5. Elektrische Schutzkontaktsteckdose nach Anspruch 1 bis 4, **dadurch gekennzeichnet, dass** in zumindest eine zweite Öffnung (11) einerseits ein zweiter Lichtauskoppelbereich eines zweiten Lichtleitelementes (12) hineinragt, welches andererseits zur Lichteinkopplung zumindest einem auf der zweiten Leiterplatte (6) befindlichen zweiten Leuchtmittel (5) zugeordnet ist.

6. Elektrische Schutzkontaktsteckdose nach einem der Ansprüche 1 bis 5, **dadurch gekennzeichnet, dass** zumindest ein erstes Leuchtmittel (M) und/oder ein zweites Leuchtmittel (5) der Beleuchtungseinrichtung als LED ausgebildet ist.

7. Elektrische Schutzkontaktsteckdose nach einem der Ansprüche 1 bis 6, **dadurch gekennzeichnet, dass** zumindest ein erstes Leuchtmittel (M) und/oder ein zweites Leuchtmittel (5) der Beleuchtungseinrichtung als OLED ausgebildet ist.

8. Elektrische Schutzkontaktsteckdose nach einem der Ansprüche 1 bis 7, **dadurch gekennzeichnet, dass** der Tragring (2) zumindest zum Teil aus Kunststoff besteht.

9. Elektrische Schutzkontaktsteckdose nach einem der Ansprüche 1 bis 8, **dadurch gekennzeichnet, dass** der Tragring (2) zumindest zum Teil aus Metall besteht.

10. Elektrische Schutzkontaktsteckdose nach einem der Ansprüche 1 bis 9, **dadurch gekennzeichnet, dass** die zweite Leiterplatte (6) und die Tragplatte (8) zumindest ringabschnittförmig ausgebildet sind.

11. Elektrische Schutzkontaktsteckdose nach einem der Ansprüche 1 bis 10, **dadurch gekennzeichnet, dass** an der zweiten Leiterplatte (6) und/oder an der Tragplatte (8) zumindest ein erstes Codierelement vorhanden ist, welches mit einem entsprechend ausgebildeten am Designrahmen (3) vorhandenen zweiten Codierelement zusammenwirkt.

12. Elektrische Schutzkontaktsteckdose nach einem der Ansprüche 1 bis 11, **dadurch gekennzeichnet, dass** auf der zweiten Leiterplatte (6) der zweiten Beleuchtungseinrichtung zumindest ein Helligkeitssensor (14) angeordnet ist.

## Claims

1. An electric earthing-contact socket outlet having a design cover consisting of a design frame and central socket piece, and having a base part which is provided with a supporting ring and permits the electrical connection to the installation system of the building, to which base part in addition an illumination device having at least one light-emitting means is connected, wherein the illumination device has a printed circuit board equipped with at least one light-emitting means, which board is connected in an electrically conductive manner to connecting contact parts arranged in the base part via contact springs, wherein a receiving space (A) for a first printed circuit board (L), equipped with at least one first light-emitting means (M), of a first illumination device is present in the base part (1), which board is connected in an electrically conductive manner to the connecting contact parts (10) arranged in the base part (1), and wherein the central socket piece (4) is provided with at least one first opening (O) in order to permit the light of the at least one first light-emitting means (M) to emerge, **characterised in that** a second electric printed circuit board (6), equipped with at least one second light-emitting means (5), of a second illumination device is received by a supporting plate (8) which is arranged beneath the central socket piece (4) within the passage opening (9) of the design frame (3), which plate is connected in an electrically conductive manner to the connecting contact parts (10) arranged in the base part (1) via two second contact spring elements (7), and **in that** the central socket piece (4) is provided with at least one second opening (11) in order to permit the light of the at least one second light-emitting means (5) to emerge.

2. An electric earthing-contact socket outlet according to Claim 1, **characterised in that** the first electric printed circuit board (L) is provided on one of its main faces with two contact faces which on one hand come to lie in an electrically conductive manner against first contact springs (F) and which on the other hand are connected in an electrically conductive manner to the connecting contact parts (10) of the base part (1).

3. An electric earthing-contact socket outlet according to Claim 1 or 2, **characterised in that** the second printed circuit board (6) is equipped with a plurality of second light-emitting means (5) which are associated with at least two different functional areas.

4. An electric earthing-contact socket outlet according to Claims 1 to 3, **characterised in that** on one hand a first light coupling-out region of a first fibre-optic element (S) projects into at least one first opening (O), which element on the other hand is associated with at least one first light-emitting means (M) located on the first printed circuit board (L) for coupling-in light.

5. An electric earthing-contact socket outlet according to Claims 1 to 4, **characterised in that** on one hand a second light coupling-out region of a second fibre-optic element (12) projects into at least one second opening (11), which element on the other hand is associated with at least one second light-emitting means (5) located on the second printed circuit board (6) for coupling-in light.

6. An electric earthing-contact socket outlet according to one of Claims 1 to 5, **characterised in that** at least one first light-emitting means (M) and/or one second light-emitting means (5) of the illumination device is formed as an LED.

7. An electric earthing-contact socket outlet according to one of Claims 1 to 6, **characterised in that** at least one first light-emitting means (M) and/or one second light-emitting means (5) of the illumination device is formed as an OLED.

8. An electric earthing-contact socket outlet according to one of Claims 1 to 7, **characterised in that** the supporting ring (2) consists at least in part of plastics material.

9. An electric earthing-contact socket outlet according to one of Claims 1 to 8, **characterised in that** the supporting ring (2) consists at least in part of metal.

10. An electric earthing-contact socket outlet according to one of Claims 1 to 9, **characterised in that** the second printed circuit board (6) and the supporting plate (8) are at least in the form of a ring portion.

11. An electric earthing-contact socket outlet according to one of Claims 1 to 10, **characterised in that** at least one first coding element is present on the second printed circuit board (6) and/or on the supporting plate (8), which element cooperates with a correspondingly formed second coding element present on the design frame (3).

12. An electric earthing-contact socket outlet according to one of Claims 1 to 11, **characterised in that** at least one brightness sensor (14) is arranged on the second printed circuit board (6) of the second illumination device.

## Revendications

1. Prise de courant électrique à contact de protection avec un recouvrement design composé d'un cadre design et d'une pièce centrale de prise de courant et avec une partie socle munie d'un anneau de support permettant la connexion électrique avec le système d'installation du bâtiment, à laquelle un dispositif d'éclairage présentant au moins une source lumineuse est en outre raccordé, le dispositif d'éclairage présentant une carte de circuit imprimé équipée d'au moins une source lumineuse qui est reliée électriquement au moyen de ressorts de contact à des parties de contact de raccordement disposées dans la partie socle, dans laquelle, dans la partie socle (1) est prévu un espace de réception (A) pour une première carte de circuit imprimé (L), équipée d'au moins une première source lumineuse (M), d'un premier dispositif d'éclairage, laquelle est reliée électriquement aux parties de contact de raccordement (10) disposées dans la partie socle (1) et/ou dans laquelle la pièce centrale de prise de courant (4) est munie d'au moins une première ouverture (O) pour permettre la sortie de lumière de ladite au moins une première source lumineuse (M), **caractérisée en ce qu'**une deuxième carte de circuit imprimé électrique (6), équipée d'au moins une deuxième source lumineuse (5), d'un deuxième dispositif d'éclairage est reçue par une plaque de support (8) qui est disposée au-dessous de la pièce centrale de prise de courant (4) à l'intérieur de l'ouverture de passage (9) du cadre design (3), laquelle est reliée électriquement au moyen de deux deuxièmes éléments formant ressorts de contact (7) aux parties de contact de raccordement (10) disposées dans la partie socle (1), et que la pièce centrale de prise de courant (4) est munie d'au moins une deuxième ouverture (11) pour permettre la sortie de lumière de ladite au moins une deuxième source lumineuse (5).

2. Prise de courant électrique à contact de protection selon la revendication 1, **caractérisée en ce que** la première carte de circuit imprimé électrique (L) est munie sur l'une de ses surfaces principales de deux surfaces de contact qui, d'un côté, viennent en contact électriquement avec de premiers ressorts de contact (F) et qui, de l'autre côté, sont reliées électriquement aux parties de contact de raccordement (10) de la partie socle (1).

3. Prise de courant électrique à contact de protection selon la revendication 1 ou 2, **caractérisée en ce que** la deuxième carte de circuit imprimé (6) est équipée de plusieurs deuxièmes sources lumineuses (5) qui sont associées à au moins deux zones fonctionnelles différentes.

4. Prise de courant électrique à contact de protection selon les revendications 1 à 3, **caractérisée en ce que** dans au moins une première ouverture (O) fait saillie, d'un côté, une première zone de découplage de lumière d'un premier élément de guidage de lumière (S) lequel, de l'autre côté, est associé pour le couplage de lumière à au moins une première source lumineuse (M) se trouvant sur la première carte de circuit imprimé (L).

5. Prise de courant électrique à contact de protection selon les revendications 1 à 4, **caractérisée en ce que** dans au moins une deuxième ouverture (11) fait saillie, d'un côté, une deuxième zone de découplage de lumière d'un deuxième élément de guidage de lumière (12), lequel, de l'autre côté, est associé pour le couplage de lumière à au moins une deuxième source lumineuse (5) se trouvant sur la deuxième carte de circuit imprimé (6).

6. Prise de courant électrique à contact de protection selon l'une des revendications 1 à 5, **caractérisée en ce qu'**au moins une première source lumineuse (M) et/ou une deuxième source lumineuse (5) du dispositif d'éclairage sont réalisées sous la forme de LED.

7. Prise de courant électrique à contact de protection selon l'une des revendications 1 à 6, **caractérisée en ce qu'**au moins une première source lumineuse (M) et/ou une deuxième source lumineuse (5) du dispositif d'éclairage sont réalisées sous la forme d'OLED.

8. Prise de courant électrique à contact de protection selon l'une des revendications 1 à 7, **caractérisée en ce que** l'anneau de support (2) est constitué au moins en partie de matière plastique.

9. Prise de courant électrique à contact de protection selon l'une des revendications 1 à 8, **caractérisée en ce que** l'anneau de support (2) est constitué au moins en partie de métal.

10. Prise de courant électrique à contact de protection selon l'une des revendications 1 à 9, **caractérisée en ce que** la deuxième carte de circuit imprimé (6) et la plaque de support (8) sont réalisées au moins en forme de segment d'anneau.

11. Prise de courant électrique à contact de protection selon l'une des revendications 1 à 10, **caractérisée en ce qu'**au moins un premier élément de codage est présent sur la deuxième carte de circuit imprimé (6) et/ou sur la plaque de support (8), lequel coopère avec un deuxième élément de codage de forme correspondante présent sur le cadre design (3).

12. Prise de courant électrique à contact de protection selon l'une des revendications 1 à 11, **caractérisée en ce qu'**au moins un capteur de luminosité (14) est disposé sur la deuxième carte de circuit imprimé (6) du deuxième dispositif d'éclairage.
